# EUROPEAN PATENT APPLICATION

(11) **EP 4 611 436 A1**
(43) Date of publication of application: **03.09.2025**
(21) Application number: 23887492.9
(22) Date of filing: 29.06.2023
(51) Int. Cl.: H04W 48/08

(54) **COMMUNICATION METHOD AND APPARATUS**

(30) Priority: 10.11.2022 CN 202211408438
(71) Applicant: Huawei Technologies Co., Ltd., Shenzhen, Guangdong 518129 (CN)
(72) Inventor: YANG, Mao, Xi'an, Shaanxi 710072 (CN); GAO, Qingsong, Xi'an, Shaanxi 710072 (CN); LI, Yunbo, Shenzhen, Guangdong 518129 (CN)
(74) Representative: Thun, Clemens
(86) International application number: PCT/CN2023/104214
(87) International publication number: WO 2024/098796

(57) **Abstract**

This application provides a communication method and apparatus, and belongs to the field of communication technologies, to improve communication resource utilization of another cell. In the method, because a communication range of a cell of a first network device overlaps a communication range of a cell of a second network device, communication in the cell of the first network device affects the cell of the second network device. In this case, if communication in the cell of the first network device is suspended, for example, a first broadcast TWT between the first network device and at least one terminal in the cell is suspended, the first network device may notify the cell of the second network device by using suspension information, so that the cell of the second network device may send, based on the suspension information, first indication information to at least one terminal in the cell of the second network device, for example, a first terminal in the cell of the second network device, to indicate that the first terminal may not need to remain quiet. Therefore, communication resource utilization of the cell of the second network device is improved.

## Description

This application claims priority to Chinese Patent Application No. 202211408438.4, filed with the China National Intellectual Property Administration on November 10, 2022 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

Currently, an existing target wake time (target wake time, TWT) information frame may be used to suspend an individual TWT (individual TWT) or all TWTs of a current cell, where all the TWTs include the individual TWT and a broadcast TWT. The cell is an area in which a network device provides a service, or a physical area of signal coverage of a network device.

However, such an operating manner of the cell affects communication of another cell, and consequently, communication resource utilization of the another cell is reduced.

### SUMMARY

Embodiments of this application provide a communication method and apparatus, to improve communication resource utilization of another cell.

To achieve the foregoing objective, this application uses the following technical solutions.

According to a first aspect, a communication method is provided. The method includes: A first network device obtains suspension information when a first broadcast target wake time TWT between the first network device and at least one terminal is suspended, and sends the suspension information to a second network device. The at least one terminal is a terminal in a cell of the first network device, the suspension information indicates that the first broadcast TWT is suspended, and a communication range of a cell of the second network device overlaps a communication range of the cell of the first network device.

It can be learned from the method according to the first aspect that, because the communication range of the cell of the first network device overlaps the communication range of the cell of the second network device, communication in the cell of the first network device affects the cell of the second network device. In this case, if communication in the cell of the first network device is suspended, for example, the first broadcast TWT between the first network device and the at least one terminal in the cell is suspended, the first network device may notify the cell of the second network device by using the suspension information, so that communication in the cell of the second network device can be resumed. Therefore, communication resource utilization of the cell of the second network device can be improved.

In a possible design scheme, the suspension information includes at least one of the following: an identifier of the first broadcast TWT or a suspension time of the first broadcast TWT. The identifier of the first broadcast TWT may be carried in a broadcast TWT identifier (broadcast TWT ID) field. The identifier of the first broadcast TWT may be an ID of the first broadcast TWT, and indicates that an identifier of a suspended broadcast TWT is the first broadcast TWT. The suspension time of the first broadcast TWT may be carried in a next TWT (next TWT) field, and the suspension time of the first broadcast TWT may include information such as suspension duration of the first broadcast TWT, a suspension start time, and a suspension end time.

It may be understood that, when a plurality of broadcast TWTs need to be suspended, the first network device needs to jointly indicate, based on an identifier and a suspension time of each broadcast TWT, a specific broadcast TWT that is suspended and how long the broadcast TWT is suspended, to prevent the second network device from mistakenly identifying or mistakenly processing the suspended broadcast TWT. Certainly, if only one broadcast TWT needs to be suspended, the suspension information may not carry an identifier of the broadcast TWT. If a plurality of broadcast TWTs need to be suspended, in addition to the first broadcast TWT, the suspension information may further include identifiers of TWTs such as a second broadcast TWT and a third broadcast TWT. If suspension times of the suspended broadcast TWTs are different, the suspension information may further carry the suspension times of the suspended broadcast TWTs.

In a possible design scheme, the suspension information includes at least one of the following: a first bitmap or a suspension time of the first broadcast TWT. The first bitmap may be carried in a broadcast TWT identifier bitmap (broadcast TWT ID bitmap), to indicate that the first broadcast TWT is suspended. The suspension time of the first broadcast TWT may be carried in a next TWT field, and the suspension time of the first broadcast TWT may include information such as suspension duration of the first broadcast TWT, a suspension start time, and a suspension end time.

Optionally, the first bitmap includes a plurality of bits corresponding to a plurality of broadcast TWTs of the first network device, a location, in the plurality of bits, of a first bit in the plurality of bits indicates the first broadcast TWT, and a value of the first bit indicates that the first broadcast TWT is suspended.

It can be learned that because each bit may correspondingly indicate whether one broadcast TWT is suspended, locations of the plurality of bits may simultaneously indicate a plurality of suspended broadcast TWTs. Compared with the foregoing design scheme, the first network device does not need to include a plurality of broadcast TWT identifiers in the suspension information, so that overheads can be reduced. In addition, the plurality of suspended broadcast TWTs may share a same suspension time, so that a quantity of times of sending the suspension information can be reduced, and overheads can be further reduced.

According to a second aspect, a communication method is provided. The method includes: A second network device receives suspension information from a first network device, and sends first indication information to at least one terminal in a cell of the second network device based on the suspension information. The suspension information indicates that a first broadcast TWT of the first network device is suspended, the first broadcast TWT is suspended means that a broadcast TWT between the first network device and a terminal in a cell of the first network device is suspended, a communication range of the cell of the first network device overlaps a communication range of the cell of the second network device, and the first indication information indicates that the at least one terminal is able to perform data transmission.

It can be learned from the method according to the second aspect that, because the communication range of the cell of the first network device overlaps the communication range of the cell of the second network device, communication in the cell of the first network device affects the cell of the second network device. In this case, if communication in the cell of the first network device is suspended, for example, the first broadcast TWT between the first network device and the at least one terminal in the cell is suspended, the first network device may notify the cell of the second network device by using the suspension information, so that communication in the cell of the second network device can be resumed, for example, the second network device may indicate, by using the first indication information, the terminal in the cell of the second network device to perform data transmission without remaining quiet. Therefore, communication resource utilization of the cell of the second network device can be improved.

In a possible design scheme, the suspension information includes at least one of the following: an identifier of the first broadcast TWT or a suspension time of the first broadcast TWT.

In a possible design scheme, the suspension information includes at least one of the following: a first bitmap or a suspension time of the first broadcast TWT, where the first bitmap indicates that the first broadcast TWT is suspended.

Optionally, the first bitmap includes a plurality of bits corresponding to a plurality of broadcast TWTs of the first network device, a location, in the plurality of bits, of a first bit in the plurality of bits indicates the first broadcast TWT, and a value of the first bit indicates that the first broadcast TWT is suspended.

In a possible design scheme, the first indication information indicates that the at least one terminal is able to perform data transmission in a first time, and the first time is a time in which the first network device sets up a service period of the first broadcast TWT when the first broadcast TWT is not suspended. In other words, when the first broadcast TWT is not suspended, the first network device needs to access a channel and perform data transmission in the first time. In this case, the terminal in the cell of the second network device cannot perform data transmission before channel access in the first time. When the first broadcast TWT is suspended, the second network device may indicate, based on the first indication information, the at least one terminal to perform data transmission without remaining quiet in the first time, so that resource utilization can be improved.

Optionally, the second network device sets up a second broadcast TWT, the second broadcast TWT is a broadcast TWT in which the at least one terminal is not allowed to set up a service period of the broadcast TWT with the second network device, a time period of a service period of the second broadcast TWT is the same as a time period of the service period of the first broadcast TWT, and the first indication information indicates that the second broadcast TWT is canceled or suspended. It may be understood that the second network device may set up the second broadcast TWT whose service period is aligned with the service period of the first broadcast TWT, and terminal access is not allowed in the second broadcast TWT. Therefore, the terminal in the cell of the second network device can be indicated to remain quiet during channel access of the first broadcast TWT, and interference to channel establishment of the first broadcast TWT can be avoided, so that channel access of the first broadcast TWT can be protected. On this basis, after receiving the suspension information of the first broadcast TWT, the second network device may directly indicate, by using the first indication information, that the second broadcast TWT is canceled or suspended, so that the at least one terminal is able to perform data transmission in the first time without remaining quiet, and therefore resource utilization can be improved.

In a possible design scheme, the method further includes: When the second broadcast TWT is canceled, the second network device sends second indication information to the at least one terminal. The second indication information indicates to set up a third broadcast TWT after the first broadcast TWT is resumed, a time period of a service period of the third broadcast TWT is the same as the time period of the service period of the first broadcast TWT, and the third broadcast TWT is a broadcast TWT in which the at least one terminal is not allowed to set up a service period of the broadcast TWT with the second network device. When the first broadcast TWT is resumed, the second network device re-sets up the second broadcast TWT by using the second indication information, to continue to protect channel access of the first broadcast TWT.

For other technical effects of the method according to the second aspect, refer to the technical effects of the method according to the first aspect. Details are not described herein again.

According to a third aspect, a communication method is provided. The method includes: A first terminal in a cell of a second network device receives first indication information from the second network device, and performs data transmission. The first indication information indicates that at least one terminal in the cell of the second network device is able to perform data transmission, a communication range of the cell of the second network device overlaps a communication range of a cell of a first network device, a first broadcast TWT of the first network device is suspended, and that a first broadcast TWT is suspended means that a broadcast TWT between the first network device and a terminal in the cell of the first network device is suspended.

In a possible design scheme, the first indication information indicates that the at least one terminal is able to perform data transmission in a first time, and the first time is a time in which the first network device sets up a service period of the first broadcast TWT when the first broadcast TWT is not suspended.

Optionally, the second network device sets up a second broadcast TWT, the second broadcast TWT is a broadcast TWT in which the at least one terminal is not allowed to set up a service period of the broadcast TWT with the second network device, and a time period of a service period of the second broadcast TWT is the same as a time period of the service period of the first broadcast TWT; and the first indication information indicates that the second broadcast TWT is canceled or suspended.

In a possible design scheme, the method further includes: When the second broadcast TWT is canceled, the first terminal receives second indication information from the second network device, where the second indication information indicates to set up a third broadcast TWT after the first broadcast TWT is resumed, a time period of a service period of the third broadcast TWT is the same as the time period of the service period of the first broadcast TWT, and the third broadcast TWT is a broadcast TWT in which the at least one terminal is not allowed to set up a service period of the broadcast TWT with the second network device.

For technical effects of the method according to the third aspect, refer to the technical effects of the method according to the second aspect. Details are not described herein again.

According to a fourth aspect, a communication apparatus is provided. The communication apparatus includes modules configured to perform the method according to the first aspect, for example, a transceiver module and a processing module.

The processing module is configured to obtain suspension information when a first broadcast target wake time TWT between the first network device and at least one terminal is suspended. The at least one terminal is a terminal in a cell of the first network device, and the suspension information indicates that the first broadcast TWT is suspended. The transceiver module is configured to send the suspension information to a second network device. A communication range of a cell of the second network device overlaps a communication range of the cell of the first network device.

In a possible design scheme, the suspension information includes at least one of the following: an identifier of the first broadcast TWT or a suspension time of the first broadcast TWT.

In a possible design scheme, the suspension information includes at least one of the following: a first bitmap or a suspension time of the first broadcast TWT, where the first bitmap indicates that the first broadcast TWT is suspended.

Optionally, the first bitmap includes a plurality of bits corresponding to a plurality of broadcast TWTs of the first network device, a location, in the plurality of bits, of a first bit in the plurality of bits indicates the first broadcast TWT, and a value of the first bit indicates that the first broadcast TWT is suspended.

Optionally, the transceiver module may include a sending module and a receiving module. The sending module is configured to implement a sending function of the communication apparatus according to the fourth aspect, and the receiving module is configured to implement a receiving function of the communication apparatus according to the fourth aspect.

Optionally, the communication apparatus according to the fourth aspect may further include a storage module. The storage module stores a program or instructions. When the processing module executes the program or the instructions, the communication apparatus is enabled to perform the method according to the first aspect.

It may be understood that the communication apparatus according to the fourth aspect may be a terminal, for example, a remote device, or may be a chip (system) or another part or component that may be disposed in the terminal, or may be an apparatus including the terminal. This is not limited in this application.

In addition, for technical effects of the communication apparatus according to the fourth aspect, refer to the technical effects of the method according to the first aspect. Details are not described herein again.

According to a fifth aspect, a communication apparatus is provided. The communication apparatus includes modules configured to perform the method according to the second aspect, for example, a transceiver module and a processing module.

The transceiver module is configured to receive suspension information from a first network device. The suspension information indicates that a first broadcast target wake time TWT of the first network device is suspended, that a first broadcast TWT is suspended means that a broadcast TWT between the first network device and a terminal in a cell of the first network device is suspended, and a communication range of the cell of the first network device overlaps a communication range of a cell of a second network device. The processing module is configured to send first indication information to at least one terminal in the cell of the second network device based on the suspension information. The first indication information indicates that the at least one terminal is able to perform data transmission.

In a possible design scheme, the suspension information includes at least one of the following: an identifier of the first broadcast TWT or a suspension time of the first broadcast TWT.

In a possible design scheme, the suspension information includes at least one of the following: a first bitmap or a suspension time of the first broadcast TWT, where the first bitmap indicates that the first broadcast TWT is suspended.

Optionally, the first bitmap includes a plurality of bits corresponding to a plurality of broadcast TWTs of the first network device, a location, in the plurality of bits, of a first bit in the plurality of bits indicates the first broadcast TWT, and a value of the first bit indicates that the first broadcast TWT is suspended.

In a possible design scheme, the first indication information indicates that the at least one terminal is able to perform data transmission in a first time, and the first time is a time in which the first network device sets up a service period of the first broadcast TWT when the first broadcast TWT is not suspended.

Optionally, the second network device sets up a second broadcast TWT, the second broadcast TWT is a broadcast TWT in which the at least one terminal is not allowed to set up a service period of the broadcast TWT with the second network device, and a time period of a service period of the second broadcast TWT is the same as a time period of the service period of the first broadcast TWT; and
the first indication information indicates that the second broadcast TWT is canceled or suspended.

Optionally, the transceiver module is further configured to: when the second broadcast TWT is canceled, send second indication information to the at least one terminal. The second indication information indicates to set up a third broadcast TWT after the first broadcast TWT is resumed, a time period of a service period of the third broadcast TWT is the same as the time period of the service period of the first broadcast TWT, and the third broadcast TWT is a broadcast TWT in which the at least one terminal is not allowed to set up a service period of the broadcast TWT with the second network device.

Optionally, the transceiver module may include a sending module and a receiving module. The sending module is configured to implement a sending function of the communication apparatus according to the fifth aspect, and the receiving module is configured to implement a receiving function of the communication apparatus according to the fifth aspect.

Optionally, the communication apparatus according to the fifth aspect may further include a storage module. The storage module stores a program or instructions. When the processing module executes the program or the instructions, the communication apparatus is enabled to perform the method according to the second aspect.

It may be understood that the communication apparatus according to the fifth aspect may be a terminal, for example, a remote device, or may be a chip (system) or another part or component that may be disposed in the terminal, or may be an apparatus including the terminal. This is not limited in this application.

In addition, for technical effects of the communication apparatus according to the fifth aspect, refer to the technical effects of the method according to the second aspect. Details are not described herein again.

According to a sixth aspect, a communication apparatus is provided. The communication apparatus includes modules configured to perform the method according to the third aspect, for example, a transceiver module and a processing module.

The transceiver module is configured to receive first indication information from a second network device. The first indication information indicates that at least one terminal in a cell of the second network device is able to perform data transmission, a communication range of the cell of the second network device overlaps a communication range of a cell of a first network device, a first broadcast target wake time TWT of the first network device is suspended, and that a first broadcast TWT is suspended means that a broadcast TWT between the first network device and a terminal in the cell of the first network device is suspended. The processing module is configured to perform data transmission based on the first indication information.

In a possible design scheme, the first indication information indicates that the at least one terminal is able to perform data transmission in a first time, and the first time is a time in which the first network device sets up a service period of the first broadcast TWT when the first broadcast TWT is not suspended.

Optionally, the second network device sets up a second broadcast TWT, the second broadcast TWT is a broadcast TWT in which the at least one terminal is not allowed to set up a service period of the broadcast TWT with the second network device, a time period of a service period of the second broadcast TWT is the same as a time period of the service period of the first broadcast TWT, and the first indication information indicates that the second broadcast TWT is canceled or suspended.

Optionally, the transceiver module is further configured to: when the second broadcast TWT is canceled, receive second indication information from the second network device. The second indication information indicates to set up a third broadcast TWT after the first broadcast TWT is resumed, a time period of a service period of the third broadcast TWT is the same as the time period of the service period of the first broadcast TWT, and the third broadcast TWT is a broadcast TWT in which the at least one terminal is not allowed to set up a service period of the broadcast TWT with the second network device.

Optionally, the transceiver module may include a sending module and a receiving module. The sending module is configured to implement a sending function of the communication apparatus according to the sixth aspect, and the receiving module is configured to implement a receiving function of the communication apparatus according to the sixth aspect.

Optionally, the communication apparatus according to the sixth aspect may further include a storage module. The storage module stores a program or instructions. When the processing module executes the program or the instructions, the communication apparatus is enabled to perform the method according to the third aspect.

It may be understood that the communication apparatus according to the sixth aspect may be a terminal, for example, a remote device, or may be a chip (system) or another part or component that may be disposed in the terminal, or may be an apparatus including the terminal. This is not limited in this application.

In addition, for technical effects of the communication apparatus according to the sixth aspect, refer to the technical effects of the method according to the third aspect. Details are not described herein again.

According to a seventh aspect, a communication apparatus is provided. The communication apparatus includes a processor. The processor is configured to perform the method according to any one of the possible implementations of the first aspect to the third aspect.

In a possible design scheme, the communication apparatus according to the seventh aspect may further include a transceiver. The transceiver may be a transceiver circuit or an interface circuit. The transceiver may be used by the communication apparatus according to the seventh aspect to communicate with another communication apparatus.

In a possible design scheme, the communication apparatus according to the seventh aspect may further include a memory. The memory and the processor may be integrated together, or may be disposed separately. The memory may be configured to store a computer program and/or data in the method according to any one of the first aspect to the third aspect.

In this embodiment of this application, the communication apparatus according to the seventh aspect may be the terminal according to any one of the first aspect to the third aspect, or a chip (system) or another part or component that may be disposed in the terminal, or an apparatus including the terminal.

In addition, for technical effects of the communication apparatus according to the seventh aspect, refer to the technical effects of the method according to any one of the implementations of the first aspect to the third aspect. Details are not described herein again.

According to an eighth aspect, a communication apparatus is provided. The communication apparatus includes a processor. The processor is coupled to a memory. The processor is configured to execute a computer program stored in the memory, to enable the communication apparatus to perform the method according to any one of the possible implementations of the first aspect to the third aspect.

In a possible design scheme, the communication apparatus according to the eighth aspect may further include a transceiver. The transceiver may be a transceiver circuit or an interface circuit. The transceiver may be used by the communication apparatus according to the eighth aspect to communicate with another communication apparatus.

In this embodiment of this application, the communication apparatus according to the eighth aspect may be the terminal according to any one of the first aspect to the third aspect, or a chip (system) or another part or component that may be disposed in the terminal, or an apparatus including the terminal.

In addition, for technical effects of the communication apparatus according to the eighth aspect, refer to the technical effects of the method according to any one of the implementations of the first aspect to the third aspect. Details are not described herein again.

According to a ninth aspect, a communication apparatus is provided. The apparatus includes a processor and a memory. The memory is configured to store a computer program. When the processor executes the computer program, the communication apparatus is enabled to perform the method according to any one of the implementations of the first aspect to the third aspect.

In a possible design scheme, the communication apparatus according to the ninth aspect may further include a transceiver. The transceiver may be a transceiver circuit or an interface circuit. The transceiver may be used by the communication apparatus according to the ninth aspect to communicate with another communication apparatus.

In this embodiment of this application, the communication apparatus according to the ninth aspect may be the terminal according to any one of the first aspect to the third aspect, or a chip (system) or another part or component that may be disposed in the terminal, or an apparatus including the terminal.

In addition, for technical effects of the communication apparatus according to the ninth aspect, refer to the technical effects of the method according to any one of the implementations of the first aspect to the third aspect. Details are not described herein again.

According to a tenth aspect, a communication system is provided. The communication system includes a remote device, a first relay device, and a second relay device. The remote device, the first relay device, and the second relay device are configured to perform the method according to the third aspect or the method according to the fourth aspect.

According to an eleventh aspect, a computer-readable storage medium is provided. The computer-readable storage medium includes a computer program or instructions. When the computer program or the instructions are run on a computer, the computer is enabled to perform the method according to any one of the possible implementations of the first aspect to the third aspect.

According to a twelfth aspect, a computer program product is provided. The computer program product includes a computer program or instructions. When the computer program or the instructions are run on a computer, the computer is enabled to perform the method according to any one of the possible implementations of the first aspect to the third aspect.

### BRIEF DESCRIPTION OF DRAWINGS

FIG. 1 is a diagram of an operating principle of an r-TWT;
FIG. 2a is a diagram of a frame structure of a TWT information field;
FIG. 2b is a diagram of a structure of a broadcast target wake time information subfield;
FIG. 2c is a diagram of a structure of a restricted target wake time information subfield;
FIG. 3 is a diagram of an architecture of a communication system according to an embodiment of this application;
FIG. 4 is a schematic flowchart of a communication method according to an embodiment of this application;
FIG. 5 is a diagram of a structure of an enhanced TWT information frame according to an embodiment of this application;
FIG. 6 is a diagram 1 of a frame structure of a management frame according to an embodiment of this application;
FIG. 7 is a diagram 2 of a frame structure of a management frame according to an embodiment of this application;
FIG. 8 is a diagram 3 of a frame structure of a management frame according to an embodiment of this application;
FIG. 9 is a diagram 4 of a frame structure of a management frame according to an embodiment of this application;
FIG. 10 is a diagram of a structure of an r-TWT suspension information element according to an embodiment of this application;
FIG. 11 is a diagram 5 of a frame structure of a management frame according to an embodiment of this application;
FIG. 12 is a diagram 6 of a frame structure of a management frame according to an embodiment of this application;
FIG. 13 is a diagram 1 of a structure of a communication apparatus according to an embodiment of this application; and
FIG. 14 is a diagram 2 of a structure of a communication apparatus according to an embodiment of this application.

### DESCRIPTION OF EMBODIMENTS

For ease of understanding, the following first describes technical terms in embodiments of this application.

### 1. TWT:

The TWT is a technology defined in wireless communication technology (wireless fidelity, Wi-Fi) 6 for energy saving. A core idea of the TWT is to set some periodic time periods, so that some devices only need to remain in an active state in these TWT service periods (service periods, TWT SPs), and can sleep at another time, to save energy.

TWTs are classified into an individual TWT (individual TWT) and a broadcast TWT (broadcast TWT). In the individual TWT, each station (station, STA) may separately set up a TWT agreement with an access point (access point, AP). Therefore, each STA may have an active time period and a sleep time period of the STA. In the broadcast TWT, an AP may set up a public TWT agreement for a group of STAs, and a plurality of STAs operate in a same active time period and sleep in another time period.

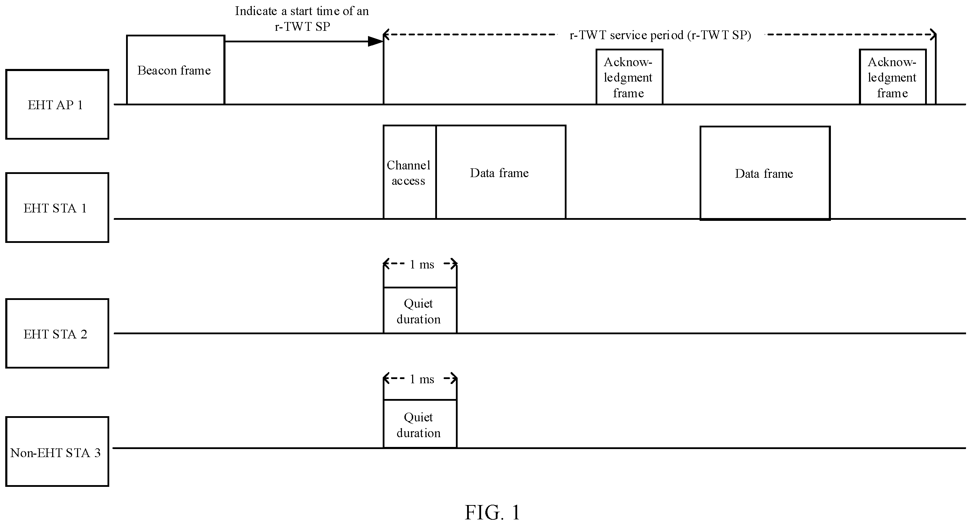

Specifically, a case of the broadcast TWT is a restricted target wake time (restricted target wake time, r-TWT). The r-TWT is a new mechanism defined in wireless local area network (wireless local area network, WLAN) 802.11be for ensuring a low-latency service, and 802.11be is referred to as extremely high throughput (extremely high throughput, EHT). Standards before 802.11be, such as IEEE 802.11a, IEEE 802.11ac, and IEEE 802.11ax, are collectively referred to as non-high throughput (non-high throughput, Non-EHT). For a cell, the cell may be an area in which an extremely high throughput access point (EHT AP) provides a service, or a physical area of signal coverage of an extremely high throughput access point. For example, a cell 1 is an area in which an EHT AP 1 provides a service, and the cell 1 includes the EHT AP 1 and three STAs. A STA 1 and a STA 2 are EHT stations, and a STA 3 is a non-EHT station. FIG. 1 is a diagram of an operating principle of the r-TWT. As shown in FIG. 1, the EHT AP 1 broadcasts one or more r-TWT SPs by using a beacon (beacon) frame or a probe response (probe response) frame. After receiving the r-TWT element, the STA 1 and the STA2 determine whether to join an r-TWT group.

If the STA 1 sends a request for joining the r-TWT group to the EHT AP 1, and the EHT AP 1 sends, to the STA 1, a response indicating that the STA 1 is allowed to join the r-TWT group, the STA 1 is an EHT station in the r-TWT group. If the STA 2 does not send a request for joining the r-TWT group to the EHT AP 1, or the STA 2 sends a request for joining the r-TWT group to the EHT AP 1 but the EHT AP 1 does not allow the STA 1 to join the r-TWT group, the STA 2 is an EHT station outside the r-TWT group.

After receiving any r-TWT SP broadcast by the EHT AP 1, the STA 1, the STA 2, or the STA 3 terminates a transmission opportunity in advance before the r-TWT SP starts. In addition, the EHT AP 1 may include a quiet element (quiet element) in the beacon frame or the probe response frame. The quiet element may include a quiet interval (quiet interval) aligned with a start time of the r-TWT SP, and duration is one time unit (time unit, TU), which may also be referred to as one millisecond (ms), where 1 TU=1024 microseconds (µs). For example, after the EHT AP 1 and the STA 1 perform channel access at the start time of the r-TWT SP, the STA 1 may send a data frame to the EHT AP 1, and the EHT AP 1 may feed back an acknowledgment frame to the STA 1 based on the received data frame, to implement data transmission.

The EHT AP 1 indicates, by using the quiet element, an EHT STA that belongs to the r-TWT group to ignore the quiet interval and contend for a channel after the r-TWT SP starts. A station that does not belong to the r-TWT group or another non-EHT station needs to remain quiet for one TU from the start time of the r-TWT SP based on the quiet interval. In other words, the EHT STA 1 may ignore the quiet interval, and contend for the channel after the r-TWT SP starts, while the EHT STA 2 and the non-EHT STA 3 need to remain quiet for one TU from the start time of the r-TWT SP based on the quiet interval, in other words, the EHT STA 2 and the non-EHT STA 3 do not perform data transmission in one TU from the start time of the r-TWT SP, to reduce a quantity of stations that contend for the channel in the cell 1. Therefore, a probability that the station EHT STA 1 in the group obtains the channel through contention is increased.

### 2. Overlapping basic service set (overlapping basic service set):

The OBSS means that areas in which different APs provide services or physical areas of signal coverage of different APs overlap. For example, a cell 1 includes an EHT AP 1, a STA 1, a STA 2, and a STA 3, and a cell 2 includes an EHT AP 2, a STA 4, a STA 5, and a STA 6. If areas in which the EHT AP 1 and the EHT AP 2 provide communication services or physical areas of signal coverage of the EHT AP 1 and the EHT AP 2 at least partially overlap, the cell 1 and the cell 2 are OBSSs. In other words, communication ranges of the cell 1 and the cell 2 overlap. In this case, after receiving a beacon frame broadcast by the EHT AP 1 of the cell 1, to avoid interference to r-TWT channel access of the STA 1, the STA 4, the STA 5, and the STA 6 of the cell 2 also need to remain quiet for one TU from a start time of an r-TWT SP.

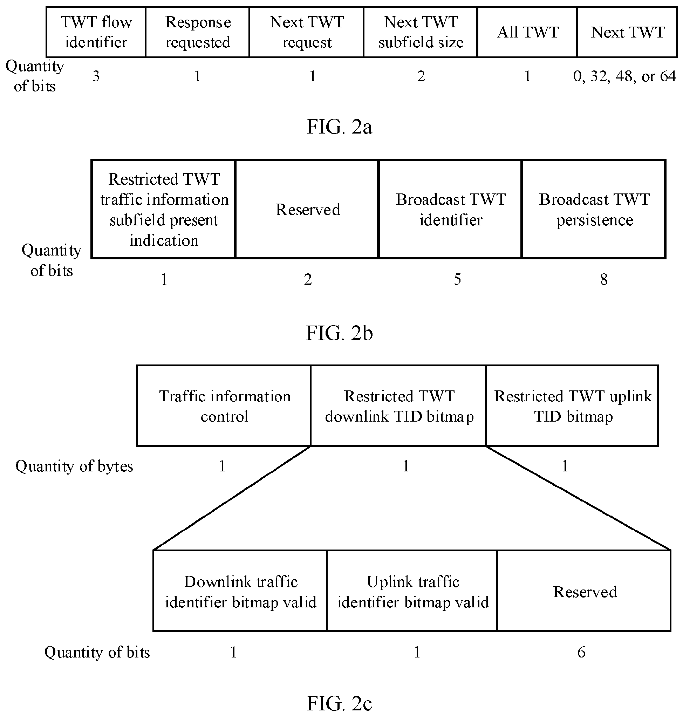

However, this r-TWT may be suspended when no data is transmitted. In this case, the EHT AP 1 and the STA 1 may trigger suspension of the r-TWT SP by exchanging a target wake time information frame (target wake time information frame). The target wake time information frame includes a TWT information field (TWT information field). FIG. 2a is a diagram of a frame structure of the TWT information field. As shown in FIG. 2a, the TWT information field includes a TWT flow identifier (TWT flow identifier) field, a response requested (response requested) field, a next TWT request (next TWT request) field, a next TWT subfield size (next TWT subfield size) field, an all TWT (All TWT) field, a next TWT (Next TWT) field, and the like.

The TWT flow identifier field indicates an identifier of an individual TWT, and occupies three bits in total.

The response requested (response requested) field indicates whether a peer end is required to send a TWT information frame, and occupies one bit in total. For example, the response requested field being set to 1 may indicate that the peer end is required to send the TWT information frame, and the response requested field being set to 0 may indicate that the peer end is not required to send the TWT information frame.

The next TWT request field indicates whether the peer end is required to send a TWT information frame including a next TWT field whose length is not 0 bits, and occupies one bit in total. For example, the next TWT request field being set to 1 may indicate that the peer end is required to send the TWT information frame including the next TWT field whose length is not 0 bits, and the next TWT request field being set to 0 may indicate that the peer end is required to send a TWT information frame including a next TWT field whose length is 0 bits.

The next TWT subfield size field indicates a length of the next TWT field, and occupies two bits in total. For example, a value 0 of the next TWT subfield size field indicates that the length of the next TWT field is 0 bits, a value 1 of the next TWT subfield size field indicates that the length of the next TWT field is 32 bits, a value 2 of the next TWT subfield size field indicates that the length of the next TWT field is 48 bits, and a value 3 of the next TWT subfield size field indicates that the length of the next TWT field is 64 bits.

The all TWT field indicates whether all TWTs indicated by this TWT information frame are suspended, and occupies one bit in total. For example, the all TWT field being set to 1 indicates that all the TWTs indicated by this TWT information frame are suspended, and all the TWTs include an individual TWT and a broadcast TWT; and the all TWT field being set to 0 indicates that not all the TWTs indicated by this TWT information frame are suspended, and in this case, the TWT flow identifier field may indicate that a specific individual TWT is suspended.

The next TWT field indicates a TWT suspension time, and may occupy 0, 32, 48, or 64 bits.

If the EHT AP 1 sends a wake time information frame to the STA 1, and in the wake time information frame, a response requested field is set to 1, a next TWT request field is set to 1, a value of a next TWT subfield size field is 0, and a length of a next TWT field is 0 bits, the wake time information frame sent by the AP 1 to the STA 1 does not carry a TWT suspension time, and the STA 1 may send a TWT information frame including a next TWT field whose length is not 0 bits to the AP 1, to notify an AP 1 side of the TWT suspension time.

If the EHT AP 1 sends a wake time information frame to the STA 1, and in the wake time information frame, a response requested field is set to 1, a next TWT request field is set to 1, a value of a next TWT subfield size field may be 1, 2, or 3, and a length of a next TWT field is not 0 bits, the wake time information frame sent by the AP 1 to the STA 1 carries a TWT suspension time, and the STA 1 may send a TWT information frame including a next TWT field whose length is not 0 bits to the AP 1. The TWT information frame fed back by the STA 1 to the AP 1 and the TWT information frame sent by the AP 1 to the STA 1 indicate the same TWT suspension time.

If the EHT AP 1 sends a wake time information frame to the STA 1, and in the wake time information frame, a response requested field is set to 1, a next TWT request field is set to 0, a value of a next TWT subfield size field is 1, 2, or 3, and a length of a next TWT field is not 0 bits, the wake time information frame sent by the AP 1 to the STA 1 carries a TWT suspension time, and the STA 1 may send a TWT information frame including a next TWT field whose length is 0 bits to the AP 1. The TWT information frame fed back by the STA 1 to the AP 1 and the TWT information frame sent by the AP 1 to the STA 1 indicate the same TWT suspension time.

If the EHT AP 1 sends a wake time information frame to the STA 1, and in the wake time information frame, a response requested field is set to 0, the STA 1 does not feed back a TWT information frame to the AP 1, regardless of whether a next TWT request field is set to 0 or 1. In this case, a value of a next TWT subfield size field cannot be 0, in other words, the TWT information frame sent by the EHT AP 1 to the STA 1 needs to carry a TWT suspension time.

FIG. 2b is a diagram of a structure of a broadcast target wake time information subfield. As shown in FIG. 2b, the broadcast target wake time information subfield may include a restricted TWT traffic information subfield present indication (restricted TWT traffic information present) field, a reserved (reserved) field, a broadcast TWT identifier (broadcast TWT ID) field, a broadcast TWT persistence (broadcast TWT persistence) field, and the like. The restricted TWT traffic information subfield present indication field being set to 1 indicates that a TWT element includes a restricted target wake time information subfield shown below in FIG. 2c. The restricted TWT traffic information subfield present indication field being set to 0 indicates that the TWT element does not include the restricted target wake time information subfield shown below in FIG. 2c. For a specific meaning of the broadcast target wake time information subfield, refer to related descriptions of the broadcast target wake time information subfield in a conventional technology. Details are not described herein again.

FIG. 2c is a diagram of a structure of a restricted target wake time information subfield. As shown in FIG. 2c, the restricted target wake time information subfield includes a traffic information control (traffic information control) field, a restricted TWT downlink TID bitmap (restricted TWT DL TID bitmap) field, and a restricted TWT uplink TID bitmap (restricted TWT UL TID bitmap) field. The restricted TWT downlink TID bitmap includes a downlink traffic identifier bitmap valid (DL TID bitmap valid) field, an uplink traffic identifier bitmap valid (UL TID bitmap valid) field, and a reserved field. For a specific meaning of the restricted target wake time information subfield, refer to related descriptions of the restricted target wake time information subfield in a conventional technology. Details are not described herein again.

However, the TWT information frame may be used to suspend an individual TWT or all TWTs of a current cell. However, another cell whose coverage area at least partially overlaps a coverage area of the current cell does not know TWT suspension information. In this case, a STA of the cell other than the current cell still remains quiet from a start time of a suspended TWT of the current cell. Consequently, data transmission efficiency of the another cell is affected, and therefore resource utilization of the cell other than the current cell is reduced.

For example, the EHT AP 1 sends a TWT information frame to the STA 1, to indicate that an r-TWT of the cell 1 is suspended. However, the EHT AP 2 does not know suspension information of the r-TWT. In this case, the STA 4, the STA 5, and the STA 6 in the cell 2 still remain quiet from a start time of the suspended r-TWT of the cell 1. Consequently, data transmission efficiency of the cell 2 is affected, and therefore communication resource utilization of the cell 2 is reduced.

To resolve the foregoing technical problem, embodiments of this application provide the following technical solutions, to improve communication resource utilization of another cell.

The following describes the technical solutions of this application with reference to accompanying drawings.

The technical solutions in embodiments of this application may be applied to various communication systems such as a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system, for example, a long term evolution (long term evolution, LTE) system, a worldwide interoperability for microwave access (worldwide interoperability for microwave access, WiMAX) communication system, a 5G system, for example, a new radio (new radio, NR) system, and a future communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, terms "information (information)", "signal (signal)", "message (message)", "channel (channel)", and "signaling (signaling)" may be interchangeably used sometimes. It should be noted that meanings expressed by the terms are matchable when differences of the terms are not emphasized. Terms "of (of)", "corresponding, relevant (corresponding, relevant)", and "corresponding (corresponding)" may be interchangeably used sometimes. It should be noted that meanings expressed by the terms are matchable when differences of the terms are not emphasized. In addition, "/" mentioned in this application may indicate an "or" relationship.

It may be understood that, in this application, an "indication" may include a direct indication, an indirect indication, an explicit indication, and an implicit indication. When a piece of indication information is described as indicating A, it may be understood as that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information itself or an index of the to-be-indicated information, may be directly indicated, and a manner in which the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device. A network architecture and a service scenario described in embodiments of this application are intended to describe the technical solutions of embodiments of this application more clearly, and do not constitute a limitation on the technical solutions provided in embodiments of this application. A person of ordinary skill in the art may know: With evolution of the network architecture and emergence of new service scenarios, the technical solutions provided in embodiments of this application are also applicable to similar technical problems.

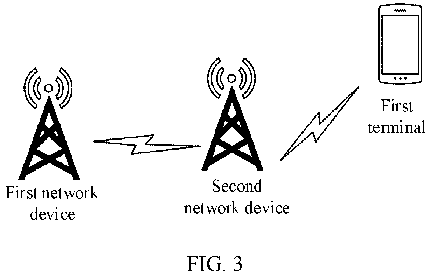

For ease of understanding embodiments of this application, a communication system shown in FIG. 3 is first used as an example to describe in detail a communication system applicable to embodiments of this application. For example, FIG. 3 is a diagram of an architecture of a communication system to which a communication method according to embodiments of this application is applicable.

As shown in FIG. 3, the communication system mainly includes a network device and a terminal.

The network device may be an AP, a wireless relay node, a wireless backhaul node, a macro base station in various forms, a micro base station (also referred to as a small cell), a relay station, an access point, a wearable device, a vehicle-mounted device, or the like in a wireless fidelity (wireless fidelity, Wi-Fi) system. Alternatively, in a next-generation mobile communication system, the network device may be named in another manner, and the naming manner falls within the protection scope of embodiments of this application. This is not limited in this application.

The terminal may also be referred to as a STA, and may be specifically a terminal having a transceiver function, or may be a chip or a chip system that may be disposed in the terminal. The terminal may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in autonomous driving (self drive), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, or the like. Alternatively, the terminal in this application may be a vehicle-mounted module, a vehicle-mounted assembly, a vehicle-mounted part, a vehicle-mounted chip, or a vehicle-mounted unit that is built in a vehicle as one or more parts or units.

In embodiments of this application, there may be a plurality of network devices, for example, a first network device and a second network device. The terminal may be a first terminal that accesses a cell of the second network device, and is also referred to as the first terminal in the cell of the second network device.

Because a communication range of a cell of the first network device overlaps a communication range of the cell of the second network device, communication in the cell of the first network device affects the cell of the second network device. In this case, if communication in the cell of the first network device is suspended, for example, a first broadcast TWT between the first network device and at least one terminal in the cell is suspended, the first network device may notify the cell of the second network device by using suspension information, so that the cell of the second network device may send, based on the suspension information, first indication information to at least one terminal in the cell of the second network device, for example, the first terminal in the cell of the second network device, to indicate that the first terminal may perform data transmission without remaining quiet. Therefore, communication resource utilization of the cell of the second network device can be improved.

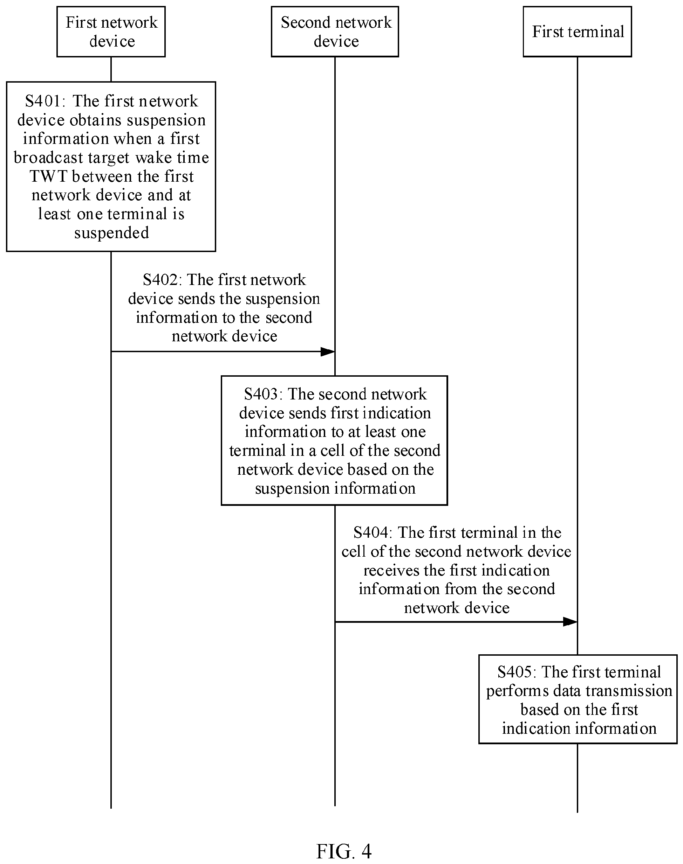

For ease of understanding, the following specifically describes the communication method provided in embodiments of this application with reference to FIG. 4 to FIG. 12.

For example, FIG. 4 is a schematic flowchart of a communication method according to an embodiment of this application. The method is applicable to communication between the first network device, the second network device, and the first terminal in the foregoing communication system.

Specifically, as shown in FIG. 4, a procedure of the communication method is as follows.

S401: The first network device obtains suspension information when a first broadcast target wake time TWT between the first network device and at least one terminal is suspended.

The at least one terminal is a terminal in a cell of the first network device, and is denoted as at least one terminal #1. The cell of the first network device is an area in which the first network device provides a communication service, or a physical area of signal coverage of the first network device. For details, refer to the foregoing related descriptions. Details are not described again.

The first broadcast TWT may be a transmission service set up between the at least one terminal #1 and the first network device. Specifically, the cell of the first network device may provide a broadcast TWT service, and the at least one terminal #1 may participate in the broadcast TWT service to set up the first broadcast TWT. For example, the at least one terminal #1 may access a channel of the first broadcast TWT through channel contention, to set up the first broadcast TWT. Then, the at least one terminal #1 may communicate with the first network device in the first broadcast TWT. The first broadcast TWT may include a plurality of r-TWT SPs, in other words, the first broadcast TWT may be periodic. For example, the first network device may set up one r-TWT SP with the at least one terminal #1 at an interval of one periodicity T, and time periods of all r-TWT SPs may be the same. The periodicity T may indicate that an interval between start times of two adjacent r-TWT SPs of the first broadcast TWT is T.

It may be understood that the at least one terminal #1 may also be represented as a broadcast TWT group, and is denoted as a first broadcast TWT group, or may be referred to as a terminal in the first broadcast TWT group. In addition, for the first broadcast TWT, refer to related descriptions in "1. TWT". Details are not described again.

That a first broadcast TWT is suspended means that the first network device and the at least one terminal #1 no longer perform data transmission on the channel of the first broadcast TWT. For example, when no data transmission is performed between the first network device and the terminal in the broadcast TWT group, or when data transmission between the first network device and the terminal in the broadcast TWT group is canceled, the broadcast TWT between the first network device and the at least one terminal #1 is suspended. There may be a plurality of suspended broadcast TWTs, and any broadcast TWT may be specifically an r-TWT.

It may be understood that the first network device may set up a plurality of broadcast TWTs with the terminal in the cell of the first network device, and the plurality of broadcast TWTs may all be suspended. For ease of understanding, the following uses an example in which the first broadcast TWT is suspended for description. For suspension of another broadcast TWT, refer to suspension of the first broadcast TWT for understanding. Details are not described again.

The suspension information may indicate that the first broadcast TWT is suspended. Specifically, that the first broadcast TWT is suspended may be indicated by using an identifier of the first broadcast TWT or a bitmap corresponding to the first broadcast TWT. Details are described below.

Manner A: The suspension is indicated by using the identifier of the first broadcast TWT. In this case, the suspension information may include at least one of the following: the identifier of the first broadcast TWT or a suspension time of the first broadcast TWT.

The identifier of the first broadcast TWT may identify the first broadcast TWT, for example, may be an ID of an r-TWT. The suspension time of the first broadcast TWT may include a suspension start time and a suspension end time, and optionally, may further include suspension duration of the first broadcast TWT, a suspension resume time of the first broadcast TWT, and the like. This is not limited.

In the manner A, the suspension information may be carried in any one of the following: an enhanced TWT information frame, a management frame (management frame), or a public action frame (action frame). In this case, the identifier of the first broadcast TWT may be carried in broadcast TWT identifier (broadcast TWT ID) fields of these frames. The suspension time of the first broadcast TWT may be carried in next TWT fields of these frames.

Optionally, these frames may further carry a transmitting address (transmitting address, TA) and a receiving address (receiving address, RA). The transmitting address is a physical address (media access control address, MAC address) of the cell of the first network device, and each network device may have a network identifier, for example, a MAC address. The receiving address is a MAC address of a cell of the second network device. Therefore, the first network device may send the suspension information of the first broadcast TWT to the second network device based on the MAC address of the cell of the second network device.

It may be understood that an r-TWT may be uniquely identified by using the MAC address of the cell of the first network device and an ID of the r-TWT, so that the second network device may determine, based on the MAC address of the cell of the first network device and the ID of the r-TWT, a specific broadcast TWT that is suspended, to prevent the second network device from mistakenly identifying or mistakenly processing the suspended r-TWT. Certainly, when an ID of an r-TWT can uniquely identify the r-TWT, the second network device may also determine, based on only the ID of the r-TWT, a specific r-TWT that is suspended.

### Case 1: Enhanced TWT information frame:

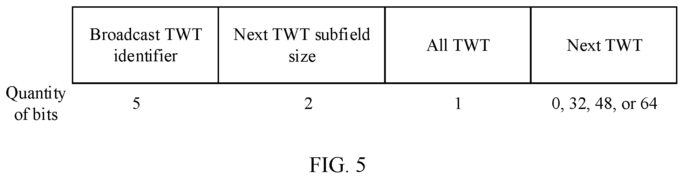

As shown in FIG. 5, the enhanced TWT information frame may be obtained through improvement based on the TWT information field shown in FIG. 2a. For example, five bits of the TWT flow identifier field, the response requested field, and the next TWT request field in the TWT information field are replaced with a broadcast TWT identifier field. In other words, the identifier of the first broadcast TWT may be carried by using the five bits.

An all TWT field indicates whether all r-TWTs of the first network device are suspended, and occupies one bit in total. For example, the all TWT field being set to 1 indicates that all the r-TWTs of the first network device are suspended, and suspension times of all the r-TWTs are the same. The suspension time may be indicated by using a next TWT field. In this case, the broadcast TWT identifier field is set as a reserved field. The all TWT field being set to 0 indicates that not all the r-TWTs of the first network device are suspended. In this case, the first network device may indicate an identifier of a specific suspended r-TWT by using the broadcast TWT identifier field. For example, the suspended r-TWT is the first broadcast TWT. In this case, the first network device may indicate, by using the broadcast TWT identifier field, that the suspended r-TWT is the first broadcast TWT.

It may be understood that the all TWT field may also be set as a reserved field. On this basis, the first network device may directly indicate, by using the broadcast TWT identifier field, an r-TWT that needs to be suspended. In this case, meanings of a next TWT subfield size field and the next TWT field are consistent with those described above. Details are not described herein.

### Case 2: Management frame:

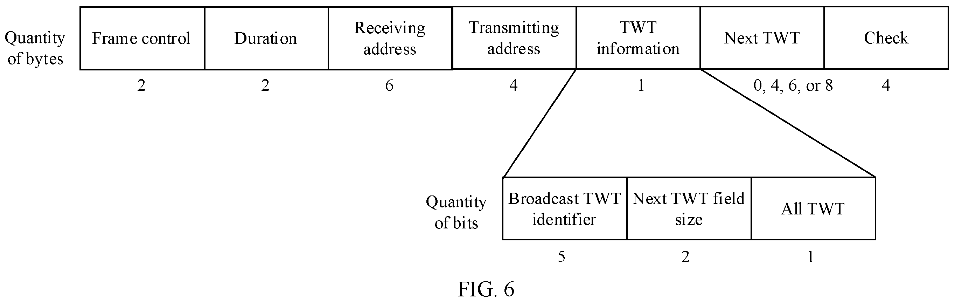

The management frame may have a plurality of frame structures, which are specifically described below. FIG. 6 is a diagram 1 of a frame structure of the management frame according to an embodiment of this application. As shown in FIG. 6, the management frame may include a frame control (frame control) field, a duration (duration) field, a receiving address field, a transmitting address field, a TWT information field, a next TWT field, a check (frame check sequence, FCS) field, and the like.

The frame control field indicates basic information of the management frame, for example, a frame type, and occupies two bytes in total.

The duration field indicates duration of exchanging the management frame, and occupies two bytes in total.

The receiving address field may occupy six bytes, and a meaning of the receiving address field is similar to that of a receiving address field in the enhanced TWT information frame. Details are not described again.

The transmitting address field may occupy four bytes, and a meaning of the transmitting address field is similar to that of a transmitting address field in the enhanced TWT information frame. Details are not described again.

The TWT information field indicates suspension information of a broadcast TWT, and occupies five bytes in total. For example, the TWT information field indicates an ID of a suspended broadcast TWT.

The next TWT field indicates suspension duration information of the broadcast TWT, and may occupy zero, four, six, or eight bytes, that is, occupy zero, 32, 48, or 64 bits.

The check field is used to check correctness of the management frame, and occupies four bytes in total.

The TWT information field includes a broadcast TWT identifier field, a next TWT field size field, and an all TWT field.

Meanings and specific indication manners of the broadcast TWT identifier field, the next TWT field size field, and the all TWT field are similar to those in FIG. 5. For details, refer to FIG. 5 for understanding. Details are not described herein again.

Quantities of bytes occupied by the foregoing information elements, such as the frame control field, the duration field, the receiving address field, the transmitting address field, the TWT information field, the next TWT field, and the check field, are merely examples. The quantities of bytes occupied by the information elements may be adjusted based on an actual situation, and are not specifically limited.

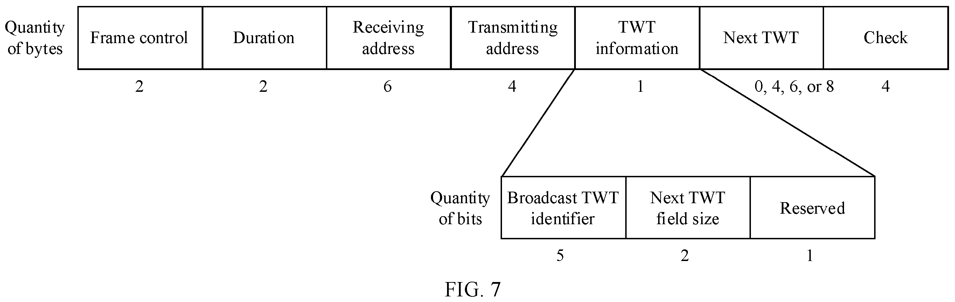

FIG. 7 is a diagram 2 of a frame structure of the management frame according to an embodiment of this application. As shown in FIG. 7, a difference between the management frame and the management frame shown in FIG. 6 lies in that an all TWT field in a TWT information field in the management frame is set as a reserved field. In this case, the first network device may indicate, by using a broadcast TWT identifier field, an identifier of a broadcast TWT that needs to be suspended. It may be understood that meanings and indication manners of other fields in FIG. 7 are similar to those in FIG. 6. For details, refer to FIG. 6 for understanding. Details are not described herein again.

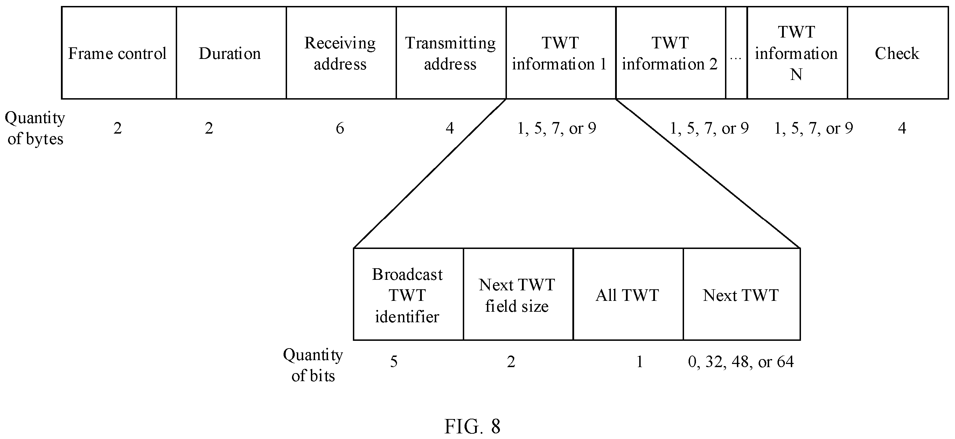

FIG. 8 is a diagram 3 of a frame structure of the management frame according to an embodiment of this application. As shown in FIG. 8, the management frame includes a frame control field, a duration field, a receiving address field, a transmitting address field, a plurality of TWT information fields, a check field, and the like. The plurality of TWT information fields may be a TWT information 1 field, a TWT information 2 field, a TWT information N field, and the like.

Each TWT information field may include a broadcast TWT identifier field, a next TWT field size field, an all TWT field, and a next TWT field.

Compared with the management frame shown in FIG. 6, in the management frame in FIG. 8, the next TWT field is placed into each TWT information field, and each TWT information field occupies one, five, seven, or nine bytes in total. Each broadcast TWT that needs to be suspended may have one independent TWT information field, and the next TWT field in each TWT information field may indicate a suspension time of a suspended broadcast TWT. When the all TWT field is not 0, sending of the management frame by the first network device to the second network device may indicate a plurality of suspended broadcast TWTs and a suspension time corresponding to each suspended broadcast TWT. Suspension duration of each suspended broadcast TWT may be different.

If an all TWT field in any TWT information field is set to 1, it indicates that all broadcast TWTs of the first network device are suspended. In this case, a suspension time of each suspended broadcast TWT is the same. In this case, the broadcast TWT identifier field in each TWT information field may be set as a reserved field for use as a subsequent extension field.

It may be understood that meanings and indication manners of other fields in FIG. 8 are similar to those in FIG. 6. For details, refer to FIG. 6 for understanding. Details are not described herein again.

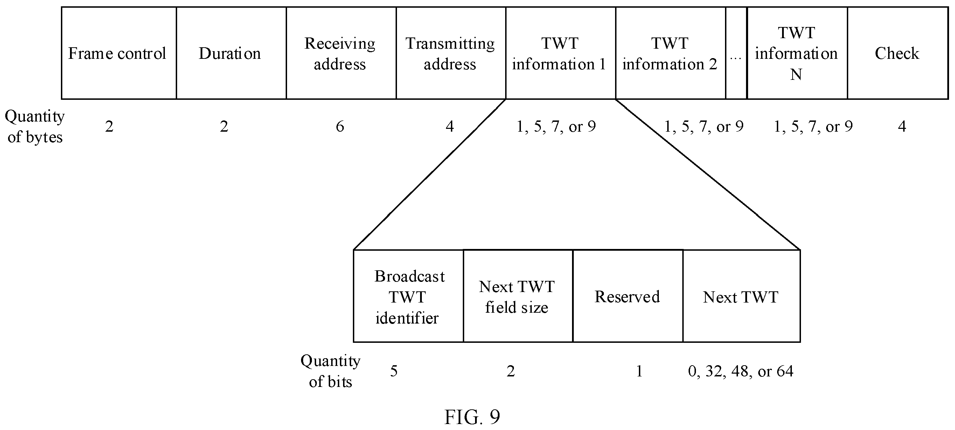

FIG. 9 is a diagram 4 of a frame structure of the management frame according to an embodiment of this application. As shown in FIG. 9, a difference between the management frame and the management frame shown in FIG. 8 lies in that an all TWT field in each TWT information field in the management frame is set as a reserved field. In other words, the management frame does not support using one TWT information field to indicate that all broadcast TWTs are suspended. In this case, the first network device may indicate, by using each broadcast TWT identifier field, an identifier of a broadcast TWT that needs to be suspended. It may be understood that meanings and indication manners of other fields in FIG. 9 are similar to those in FIG. 6. For details, refer to FIG. 6 for understanding. Details are not described herein again.

Table 1 shows a main structure of the public action frame, and the structure may include a category (category) field, a public action (public action) field, and an r-TWT suspension information element. For meanings of the category field and the public action field, refer to related descriptions in a conventional technology. Details are not described herein.

**Table 1**

| | |
|---|---|
| 1 | Category |
| 2 | Public action |
| 3 | r-TWT suspension information element |

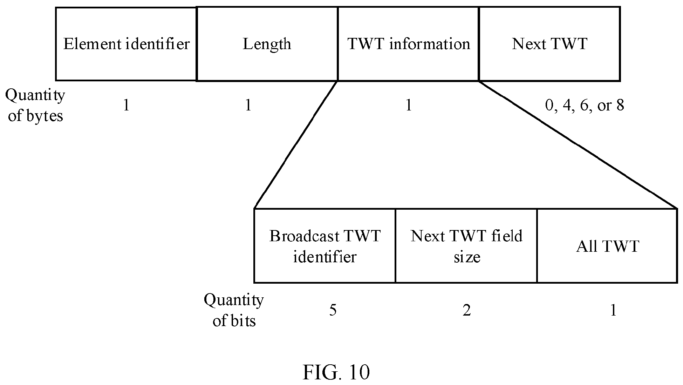

FIG. 10 is a diagram of a structure of the r-TWT suspension information element according to an embodiment of this application. As shown in FIG. 10, the r-TWT suspension information element includes an element identifier (Element ID) field, a length (length) field, a TWT information field, a next TWT field, and the like.

The element identifier field indicates an identifier of the r-TWT suspension information element, and occupies one byte in total.

The length field indicates a length of the r-TWT suspension information element, and occupies one byte in total.

Quantities of bytes occupied by the foregoing information elements, such as the element identifier field and the length field, are merely examples. The quantities of bytes occupied by the information elements may be adjusted based on an actual situation, and are not specifically limited.

Meanings and indication manners of other fields in FIG. 10 are similar to those in FIG. 6. For details, refer to FIG. 6 for understanding. Details are not described herein again.

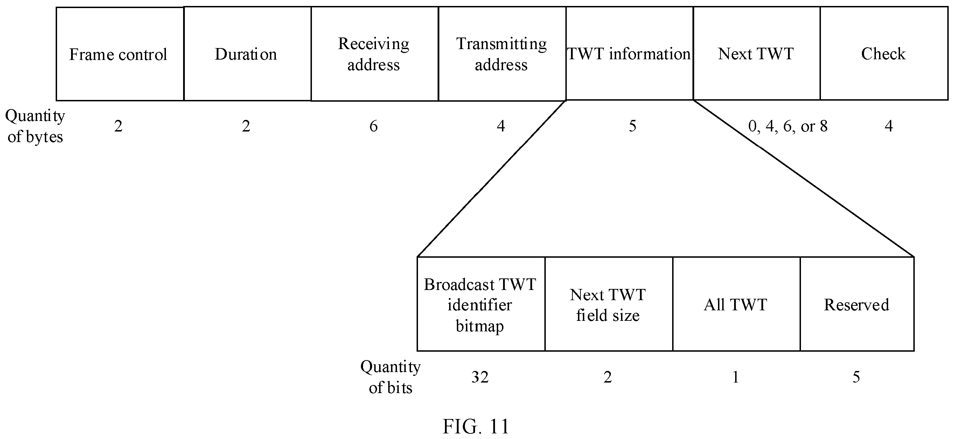

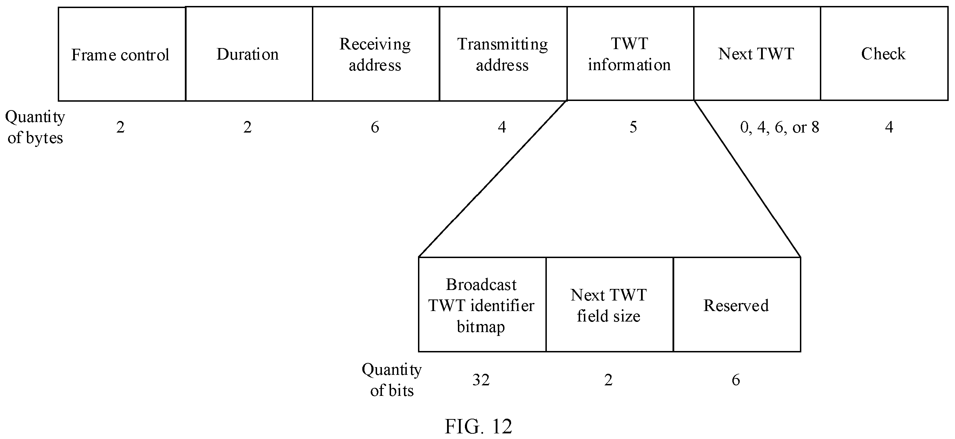

It may be understood that, all structures of the TWT information field that are described in FIG. 6 to FIG. 9 may be applied to the r-TWT suspension information element. Details are not described again. In addition, structures of the TWT information field that are described below in FIG. 11 and FIG. 12 may also be applied to the r-TWT suspension information element. For details, refer to the following related descriptions in FIG. 11 and FIG. 12.

Manner B: The suspension is indicated by using the bitmap corresponding to the first broadcast TWT. In this case, the suspension information may include at least one of the following: a first bitmap or a suspension time of the first broadcast TWT, where the first bitmap indicates that the first broadcast TWT is suspended. The first bitmap includes a plurality of bits corresponding to a plurality of broadcast TWTs of the first network device, a location, in the plurality of bits, of a first bit in the plurality of bits indicates the first broadcast TWT, and a value of the first bit indicates that the first broadcast TWT is suspended.

For example, the first bitmap includes 32 bits. In this case, any one of the 32 bits may indicate the first broadcast TWT. For example, a location of a 6^{th} bit in the first bitmap indicates the first broadcast TWT, and the location of the 6^{th} bit in the first bitmap is denoted as a bit 6. In this case, if the bit 6 is set to 1, it indicates that the first broadcast TWT is suspended; or if the bit 6 is set to 0, it indicates that the first broadcast TWT can be normally used for transmission. In the manner B, the suspension information may be carried in a management frame. Therefore, the first bitmap may be carried in a broadcast TWT identifier bitmap field of the frame. The suspension time of the first broadcast TWT may be carried in a next TWT field of the frame.

FIG. 11 is a diagram 5 of a frame structure of the management frame according to an embodiment of this application. As shown in FIG. 11, the broadcast TWT identifier bitmap field may occupy 32 bits, each bit may correspondingly indicate whether one broadcast TWT is suspended, and locations of a plurality of bits may simultaneously indicate a plurality of suspended broadcast TWTs. Therefore, overheads can be reduced. In this case, the plurality of suspended broadcast TWTs share a same next TWT field, in other words, the plurality of suspended broadcast TWTs have a same suspension time.

It may be understood that meanings and specific indication manners of other fields in FIG. 11 are similar to those in FIG. 6. For details, refer to FIG. 6 for understanding. Details are not described herein again.

FIG. 12 is a diagram 6 of a frame structure of the management frame according to an embodiment of this application. As shown in FIG. 12, a difference between the management frame and the management frame shown in FIG. 11 lies in that an all TWT field in a TWT information field in the management frame is set as a reserved field. In this case, the first network device may indicate, by using a broadcast TWT identifier bitmap field, an identifier of a broadcast TWT that needs to be suspended.

It may be understood that meanings and indication manners of other fields in FIG. 12 are similar to those in FIG. 6. For details, refer to FIG. 6 for understanding. Details are not described herein again.

It may be understood that any frame including the broadcast TWT identifier field and the broadcast TWT identifier bitmap field, or a method that can indicate that all r-TWTs are suspended are applicable to embodiments of this application. The enhanced TWT information frame, the management frame, and the public action frame are merely examples. This is not limited herein.

S402: The first network device sends the suspension information to the second network device. The second network device receives the suspension information from the first network device.

The second network device is a network device whose communication range overlaps a communication range of the first network device, in other words, a communication range of the cell of the second network device overlaps a communication range of the cell of the first network device.

The cell of the second network device is an area in which the second network device provides a communication service, or a physical area of signal coverage of the second network device. For details, refer to the foregoing related descriptions. Details are not described again. That a communication range of the cell of the second network device overlaps a communication range of the cell of the first network device means that areas in which the first network device and the second network device provide communication services or physical areas of signal coverage of the first network device and the second network device overlap.

The first network device may send the suspension information to the second network device by using the enhanced information frame, the management frame, and the public action frame, and the second network device determines, based on the received frame, a specific broadcast TWT that is suspended and how long the broadcast TWT is suspended. For example, an EHT AP 1 may send suspension information to an EHT AP 2 by using an enhanced information frame; and based on the received enhanced information frame, the second network device may determine that a suspended broadcast TWT is the first broadcast TWT and determine the suspension time of the first broadcast TWT.

S403: The second network device sends first indication information to at least one terminal in the cell of the second network device based on the suspension information.

The first indication information may indicate that the at least one terminal (denoted as at least one terminal #2) in the cell of the second network device may perform data transmission in a first time. It may be understood that the at least one terminal #2 may be at least some terminals in the cell of the second network device. This is not limited. For ease of understanding, in this embodiment of this application, the at least one terminal #2 is all terminals in the cell of the second network device.

The first time is a time point at which the at least one terminal #2 cannot perform data transmission when the first broadcast TWT is not suspended. In other words, if the first broadcast TWT is not suspended, the at least one terminal #2 cannot perform data transmission at a corresponding time point (including the first time). For ease of description, the time point at which the at least one terminal #2 cannot perform data transmission is referred to as a guard time #1. For example, the guard time #1 may be a time point at which the at least one terminal #1 sets up the first broadcast TWT with the first network device through channel contention. The first time may be specifically a period of time from a start time of the first broadcast TWT, for example, a start time of an r-TWT SP, in each first broadcast TWT periodicity. In other words, the guard time #1 may be a periodic time. For the at least one terminal #2, the at least one terminal #2 cannot perform data transmission or needs to remain in a quiet state in the guard time #1 of each periodicity, to avoid interference to channel contention of the at least one terminal #1.

In this embodiment of this application, the at least one terminal #2 may remain in the quiet state in two manners, which are separately described below.

Manner 11: The second network device directly indicates the at least one terminal #2 to remain in the quiet state.

The first network device needs to broadcast a beacon frame in a process of setting up the first broadcast TWT, and the beacon frame is denoted as a beacon frame #1. For a specific implementation, refer to related descriptions in "1. TWT". Details are not described again. In this case, the second network device may also receive the beacon frame #1, so that the second network device may determine the start time and a periodicity of the first broadcast TWT based on the beacon frame #1, and further determine the guard time #1 of each periodicity. On this basis, the second network device may indicate that the at least one terminal #2 needs to remain in the quiet state in the guard time #1 of each periodicity. For example, the second network device may broadcast the first indication information. In this case, the first indication information may be specifically a beacon frame, denoted as a beacon frame #2. Different from the beacon frame #1, the beacon frame #2 carries a quiet element indicating the quiet state. Correspondingly, when receiving the beacon frame #2, the at least one terminal #2 may determine, based on the periodicity and the quiet element, that the at least one terminal #2 needs to remain in the quiet state in the guard time #1 of each periodicity.

Manner 12: The second network device indicates, by setting up a second broadcast TWT, the at least one terminal #2 to remain in the quiet state.

It can be learned from the related descriptions of the manner 11 that, when the second network device has determined the guard time #1 of each periodicity, the second network device may still broadcast the first indication information. In this case, the first indication information may be specifically a beacon frame, denoted as a beacon frame #3. Similar to the beacon frame #1, the beacon frame #3 is mainly used to set up the second broadcast TWT whose service period is aligned with a service period of the first broadcast TWT. For example, the first broadcast TWT and the second broadcast TWT have a same periodicity and start time. After receiving the beacon frame #3, the at least one terminal #2 may request, based on the beacon frame #3, the second network device to add the at least one terminal #2 to the second broadcast TWT. However, the second network device needs to reject the request of the at least one terminal #2. In this case, for the at least one rejected terminal #2, the at least one terminal #2 needs to remain in the quiet state for a period of time (which is denoted as a guard time #2) after each periodicity of the second broadcast TWT starts, so that interference to the first broadcast TWT is avoided. In this case, because the guard time #2 of each periodicity of the second broadcast TWT is synchronized with the guard time #1 of each periodicity of the first broadcast TWT, that the at least one terminal #2 remains in the quiet state in the guard time #2 of each periodicity of the second broadcast TWT can also avoid interference to the first broadcast TWT.

It may be understood that the manner 11 and the manner 12 may also be combined for implementation. This is not limited.

In this embodiment of this application, when the first broadcast TWT is suspended, the at least one terminal #2 no longer needs to remain in the quiet state in the corresponding guard time #1, where the guard time #1 is the first time. In other words, the first time may also be understood as a specific time in the periodic guard time #1. In this case, the at least one terminal #2 may resume data transmission in the first time. Specifically, data transmission may be resumed in a plurality of manners described below.

### Manner 21:

The second network device protects channel access of the first broadcast TWT in the manner 11. In this case, after receiving the suspension information from the first network device, the second network device may broadcast a beacon frame to the at least one terminal #2, and the beacon frame is denoted as a beacon frame #4. Different from the beacon frame #2, the beacon frame #4 may not carry a quiet element, and indicates that the at least one terminal #2 does not need to remain in the quiet state in the first time and can perform data transmission. Then, if transmission in the first broadcast TWT is to be resumed, the second network device may still indicate, in the manner 11, the at least one terminal #2 to remain in the quiet state. Details are not described again.

### Manner 22:

The second network device protects channel access of the first broadcast TWT in the manner 12. In this case, after receiving the suspension information from the first network device, the second network device may broadcast a beacon frame to the at least one terminal #2, and the beacon frame is denoted as a beacon frame #5. Different from the beacon frame #3, the beacon frame #5 may carry a TWT element. A TWT setup command (TWT setup command) field of the TWT element may be "reject TWT (reject TWT)", to indicate that the at least one terminal #2 needs to cancel the second broadcast TWT, so that the at least one terminal #2 does not need to remain quiet in the first time, and can perform data transmission. Then, the second network device may send second indication information to the at least one terminal #2. In this case, the second indication information may be the beacon frame #3, indicating to set up a third broadcast TWT after the first broadcast TWT is resumed. A time period of a service period of the third broadcast TWT is the same as a time period of the service period of the first broadcast TWT, and the third broadcast TWT is a broadcast TWT in which the at least one terminal is not allowed to set up a service period of the broadcast TWT with the second network device. A specific implementation principle is similar to that of setting up the second broadcast TWT. For details, refer to the foregoing related descriptions. Details are not described again.

### Manner 23:

The second network device protects channel access of the first broadcast TWT in the manner 12. In this case, after receiving the suspension information from the first network device, the second network device may send a broadcast frame to the at least one terminal #2, to indicate that the second broadcast TWT is suspended. In this case, the second network device usually does not need to perform a related operation for resuming the first broadcast TWT.

It may be understood that the broadcast frame may have any structure in FIG. 6 to FIG. 12. This is not limited herein. In addition, the manner 21 to the manner 23 may also be combined in any manner for implementation. This is not limited.

For ease of understanding, the following uses the first terminal in the at least one terminal #2 as an example for description.

S404: The first terminal in the cell of the second network device receives the first indication information from the second network device.

The first terminal may receive the beacon frame or the broadcast frame, that is, the first indication information, from the second network device. For details, refer to related descriptions in S403. Details are not described again.

S405: The first terminal performs data transmission based on the first indication information.

The first terminal may perform data transmission in the manner 21 to the manner 23. For details, refer to the manner 21 to the manner 23 for understanding. Details are not described herein.

In conclusion, when the communication range of the cell of the first network device overlaps the communication range of the cell of the second network device, and therefore communication in the cell of the first network device affects the cell of the second network device, if communication in the cell of the first network device is suspended, for example, the first broadcast TWT between the first network device and the at least one terminal in the cell is suspended, the first network device may notify the cell of the second network device by using the suspension information, so that the cell of the second network device may send, based on the suspension information, the first indication information to the at least one terminal in the cell of the second network device, for example, the first terminal in the cell of the second network device, to indicate that the first terminal may perform data transmission without remaining quiet. Therefore, communication resource utilization of the cell of the second network device can be improved.

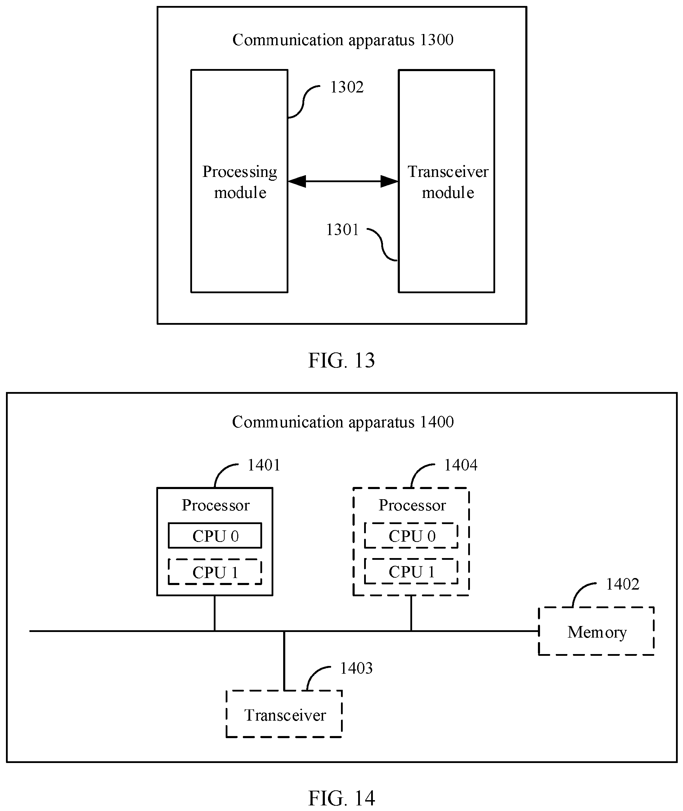

With reference to FIG. 4 to FIG. 12, the foregoing describes in detail the communication method provided in embodiments of this application. With reference to FIG. 13 and FIG. 14, the following describes in detail communication apparatuses configured to perform the communication method provided in embodiments of this application.

FIG. 13 is a diagram 1 of a structure of a communication apparatus according to an embodiment of this application. For example, as shown in FIG. 13, the communication apparatus 1300 includes a transceiver module 1301 and a processing module 1302. For ease of description, FIG. 13 shows only main parts of the communication apparatus.

In some embodiments, the communication apparatus 1300 is applicable to the communication system shown in FIG. 3, and performs functions of the foregoing first network device.

For example, the processing module 1302 is configured to obtain suspension information when a first broadcast target wake time TWT between the first network device and at least one terminal is suspended. The at least one terminal is a terminal in a cell of the first network device, and the suspension information indicates that the first broadcast TWT is suspended. The transceiver module 1301 is configured to send the suspension information to a second network device. A communication range of a cell of the second network device overlaps a communication range of the cell of the first network device.

In a possible design scheme, the suspension information includes at least one of the following: an identifier of the first broadcast TWT or a suspension time of the first broadcast TWT.

In a possible design scheme, the suspension information includes at least one of the following: a first bitmap or a suspension time of the first broadcast TWT, where the first bitmap indicates that the first broadcast TWT is suspended.

Optionally, the first bitmap includes a plurality of bits corresponding to a plurality of broadcast TWTs of the first network device, a location, in the plurality of bits, of a first bit in the plurality of bits indicates the first broadcast TWT, and a value of the first bit indicates that the first broadcast TWT is suspended.

Optionally, the transceiver module 1301 may include a sending module (not shown in FIG. 13) and a receiving module (not shown in FIG. 13). The sending module is configured to implement a sending function of the communication apparatus 1300, and the receiving module is configured to implement a receiving function of the communication apparatus 1300.

Optionally, the communication apparatus 1300 may further include a storage module (not shown in FIG. 13). The storage module stores a program or instructions. When the processing module 1302 executes the program or the instructions, the communication apparatus 1300 is enabled to perform the functions of the remote UE or the remote device in the method shown in FIG. 10 to FIG. 12 in the foregoing method.

It may be understood that the communication apparatus 1300 may be a network apparatus, may be a chip (system) or another part or component that may be disposed in the network apparatus, or may be an apparatus including the network apparatus. This is not limited in this application. It may be understood that, if the communication apparatus 1300 is a chip (system) disposed in a device, the transceiver module may be an input/output interface of the chip (system), for example, an input/output circuit or a pin.

In addition, for technical effects of the communication apparatus 1300, refer to the technical effects of the communication method shown in FIG. 4. Details are not described herein again.

In some embodiments, the communication apparatus 1300 is applicable to the communication system shown in FIG. 3, and performs functions of the second network device.

For example, the transceiver module 1301 is configured to receive suspension information from a first network device. The suspension information indicates that a first broadcast target wake time TWT of the first network device is suspended, that a first broadcast TWT is suspended means that a broadcast TWT between the first network device and a terminal in a cell of the first network device is suspended, and a communication range of the cell of the first network device overlaps a communication range of a cell of the second network device. The processing module 1302 is configured to send first indication information to at least one terminal in the cell of the second network device based on the suspension information. The first indication information indicates that the at least one terminal is able to perform data transmission.

In a possible design scheme, the suspension information includes at least one of the following: an identifier of the first broadcast TWT or a suspension time of the first broadcast TWT.

In a possible design scheme, the suspension information includes at least one of the following: a first bitmap or a suspension time of the first broadcast TWT, where the first bitmap indicates that the first broadcast TWT is suspended.

Optionally, the first bitmap includes a plurality of bits corresponding to a plurality of broadcast TWTs of the first network device, a location, in the plurality of bits, of a first bit in the plurality of bits indicates the first broadcast TWT, and a value of the first bit indicates that the first broadcast TWT is suspended.

In a possible design scheme, the first indication information indicates that the at least one terminal is able to perform data transmission in a first time, and the first time is a time in which the first network device sets up a service period of the first broadcast TWT when the first broadcast TWT is not suspended.

Optionally, the second network device sets up a second broadcast TWT, the second broadcast TWT is a broadcast TWT in which the at least one terminal is not allowed to set up a service period of the broadcast TWT with the second network device, and a time period of a service period of the second broadcast TWT is the same as a time period of the service period of the first broadcast TWT; and
the first indication information indicates that the second broadcast TWT is canceled or suspended.

Optionally, the transceiver module 1301 is further configured to: when the second broadcast TWT is canceled, send second indication information to the at least one terminal. The second indication information indicates to set up a third broadcast TWT after the first broadcast TWT is resumed, a time period of a service period of the third broadcast TWT is the same as the time period of the service period of the first broadcast TWT, and the third broadcast TWT is a broadcast TWT in which the at least one terminal is not allowed to set up a service period of the broadcast TWT with the second network device.

Optionally, the transceiver module 1301 may include a sending module (not shown in FIG. 13) and a receiving module (not shown in FIG. 13). The sending module is configured to implement a sending function of the communication apparatus 1300, and the receiving module is configured to implement a receiving function of the communication apparatus 1300.

Optionally, the communication apparatus 1300 may further include a storage module (not shown in FIG. 13). The storage module stores a program or instructions. When the processing module 1302 executes the program or the instructions, the communication apparatus 1300 is enabled to perform the functions of the network apparatus in the communication method shown in FIG. 4.

It may be understood that the communication apparatus 1300 may be a network apparatus, may be a chip (system) or another part or component that may be disposed in the network apparatus, or may be an apparatus including the network apparatus. This is not limited in this application. It may be understood that, if the communication apparatus 1300 is a chip (system) disposed in a device, the transceiver module may be an input/output interface of the chip (system), for example, an input/output circuit or a pin.

In addition, for technical effects of the communication apparatus 1300, refer to the technical effects of the communication method shown in FIG. 4. Details are not described herein again.

In some embodiments, the communication apparatus 1300 is applicable to the communication system shown in FIG. 3, and performs functions of the foregoing first terminal.

For example, the transceiver module 1301 is configured to receive first indication information from a second network device. The first indication information indicates that at least one terminal in a cell of the second network device is able to perform data transmission, a communication range of the cell of the second network device overlaps a communication range of a cell of a first network device, a first broadcast target wake time TWT of the first network device is suspended, and that a first broadcast TWT is suspended means that a broadcast TWT between the first network device and a terminal in the cell of the first network device is suspended. The processing module 1302 is configured to perform data transmission based on the first indication information.

In a possible design scheme, the first indication information indicates that the at least one terminal is able to perform data transmission in a first time, and the first time is a time in which the first network device sets up a service period of the first broadcast TWT when the first broadcast TWT is not suspended.

Optionally, the second network device sets up a second broadcast TWT, the second broadcast TWT is a broadcast TWT in which the at least one terminal is not allowed to set up a service period of the broadcast TWT with the second network device, a time period of a service period of the second broadcast TWT is the same as a time period of the service period of the first broadcast TWT, and the first indication information indicates that the second broadcast TWT is canceled or suspended.

Optionally, the transceiver module 1301 is further configured to: when the second broadcast TWT is canceled, receive second indication information from the second network device. The second indication information indicates to set up a third broadcast TWT after the first broadcast TWT is resumed, a time period of a service period of the third broadcast TWT is the same as the time period of the service period of the first broadcast TWT, and the third broadcast TWT is a broadcast TWT in which the at least one terminal is not allowed to set up a service period of the broadcast TWT with the second network device.

Optionally, the transceiver module 1301 may include a sending module (not shown in FIG. 13) and a receiving module (not shown in FIG. 13). The sending module is configured to implement a sending function of the communication apparatus 1300, and the receiving module is configured to implement a receiving function of the communication apparatus 1300.

Optionally, the communication apparatus 1300 may further include a storage module (not shown in FIG. 13). The storage module stores a program or instructions. When the processing module 1302 executes the program or the instructions, the communication apparatus 1300 is enabled to perform the functions of the network apparatus in the communication method shown in FIG. 4.

It may be understood that the communication apparatus 1300 may be a terminal, may be a chip (system) or another part or component that may be disposed in the terminal, or may be an apparatus including the terminal. This is not limited in this application. It may be understood that, if the communication apparatus 1300 is a chip (system) disposed in a device, the transceiver module may be an input/output interface of the chip (system), for example, an input/output circuit or a pin.

In addition, for technical effects of the communication apparatus 1300, refer to the technical effects of the communication method shown in FIG. 4. Details are not described herein again.

FIG. 14 is a diagram 2 of a structure of a communication apparatus according to an embodiment of this application. For example, the communication apparatus may be a terminal, or may be a chip (system) or another part or component that may be disposed in the terminal. As shown in FIG. 14, the communication apparatus 1400 may include a processor 1401. Optionally, the communication apparatus 1400 may further include a memory 1402 and/or a transceiver 1403. The processor 1401 is coupled to the memory 1402 and the transceiver 1403, for example, may be connected to the memory 1402 and the transceiver 1403 through a communication bus.

The following describes in detail each part of the communication apparatus 1400 with reference to FIG. 14.

The processor 1401 is a control center of the communication apparatus 1400, and may be one processor or may be a collective term of a plurality of processing elements. For example, the processor 1401 may be one or more central processing units (central processing units, CPUs), may be an application-specific integrated circuit (application-specific integrated circuit, ASIC), or may be configured as one or more integrated circuits implementing embodiments of this application, for example, one or more microprocessors (digital signal processors, DSPs) or one or more field programmable gate arrays (field programmable gate arrays, FPGAs).

Optionally, the processor 1401 may perform various functions of the communication apparatus 1400 by running or executing a software program stored in the memory 1402 and invoking data stored in the memory 1402, for example, perform the communication method shown in FIG. 4.

During specific implementation, in an embodiment, the processor 1401 may include one or more CPUs, for example, a CPU 0 and a CPU 1 in FIG. 14.

During specific implementation, in an embodiment, the communication apparatus 1400 may also include a plurality of processors, for example, the processor 1401 and a processor 1404 shown in FIG. 14. Each of the processors may be a single-core (single-CPU) processor, or may be a multi-core (multi-CPU) processor. The processor herein may be one or more devices, circuits, and/or processing cores configured to process data (for example, computer program instructions).

The memory 1402 is configured to store a software program for executing the solutions of this application, and the processor 1401 controls execution. For a specific implementation, refer to the foregoing method embodiment. Details are not described herein again.

Optionally, the memory 1402 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can carry or store expected program code in an instruction form or a data structure form and that can be accessed by a computer. However, the memory 1402 is not limited thereto. The memory 1402 may be integrated with the processor 1401, or may exist independently, and is coupled to the processor 1401 through an interface circuit (not shown in FIG. 14) of the communication apparatus 1400. This is not specifically limited in this embodiment of this application.

The transceiver 1403 is configured to communicate with another communication apparatus. For example, the communication apparatus 1400 is a terminal, and the transceiver 1403 may be configured to communicate with a network device or communicate with another terminal device. For another example, the communication apparatus 1400 is a network device, and the transceiver 1403 may be configured to communicate with a terminal or communicate with another network device.

Optionally, the transceiver 1403 may include a receiver and a transmitter (not separately shown in FIG. 14). The receiver is configured to implement a receiving function, and the transmitter is configured to implement a sending function.

Optionally, the transceiver 1403 may be integrated with the processor 1401, or may exist independently, and is coupled to the processor 1401 through the interface circuit (not shown in FIG. 14) of the communication apparatus 1400. This is not specifically limited in this embodiment of this application.

It may be understood that the structure of the communication apparatus 1400 shown in FIG. 14 does not constitute a limitation on the communication apparatus. An actual communication apparatus may include more or fewer parts than those shown in the figure, or some parts may be combined, or different part arrangements may be used.

In addition, for technical effects of the communication apparatus 1400, refer to the technical effects of the method in the foregoing method embodiment. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, a circuit), firmware, or any combination thereof. When software is used to implement the embodiments, all or some of the embodiments may be implemented in a form of a computer program product. The computer program product includes one or more computer instructions or computer programs. When the computer instructions or the computer programs are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the method embodiment. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
obtaining, by a first network device, suspension information when a first broadcast target wake time TWT between the first network device and at least one terminal is suspended, wherein the at least one terminal is a terminal in a cell of the first network device, and the suspension information indicates that the first broadcast TWT is suspended; and
sending, by the first network device, the suspension information to a second network device, wherein a communication range of a cell of the second network device overlaps a communication range of the cell of the first network device.

2. The method according to claim 1, wherein the suspension information comprises at least one of the following: an identifier of the first broadcast TWT or a suspension time of the first broadcast TWT.

3. The method according to claim 1, wherein the suspension information comprises at least one of the following: a first bitmap or a suspension time of the first broadcast TWT, wherein the first bitmap indicates that the first broadcast TWT is suspended.

4. The method according to claim 3, wherein the first bitmap comprises a plurality of bits corresponding to a plurality of broadcast TWTs of the first network device, a location of a first bit in the plurality of bits indicates the first broadcast TWT, and a value of the first bit indicates that the first broadcast TWT is suspended.

5. A communication method, wherein the method comprises:
receiving, by a second network device, suspension information from a first network device, wherein the suspension information indicates that a first broadcast TWT of the first network device is suspended, that a first broadcast TWT is suspended means that a broadcast TWT between the first network device and a terminal in a cell of the first network device is suspended, and a communication range of the cell of the first network device overlaps a communication range of a cell of the second network device; and
sending, by the second network device, first indication information to at least one terminal in the cell of the second network device based on the suspension information, wherein the first indication information indicates that the at least one terminal is able to perform data transmission.

6. The method according to claim 5, wherein the suspension information comprises at least one of the following: an identifier of the first broadcast TWT or a suspension time of the first broadcast TWT.

7. The method according to claim 5, wherein the suspension information comprises at least one of the following: a first bitmap or a suspension time of the first broadcast TWT, wherein the first bitmap indicates that the first broadcast TWT is suspended.

8. The method according to claim 7, wherein the first bitmap comprises a plurality of bits corresponding to a plurality of broadcast TWTs of the first network device, a location, in the plurality of bits, of a first bit in the plurality of bits indicates the first broadcast TWT, and a value of the first bit indicates that the first broadcast TWT is suspended.

9. The method according to any one of claims 5 to 8, wherein the first indication information indicates that the at least one terminal is able to perform data transmission in a first time, and the first time is a time in which the first network device sets up a service period of the first broadcast TWT when the first broadcast TWT is not suspended.

10. The method according to claim 9, wherein the second network device sets up a second broadcast TWT, the second broadcast TWT is a broadcast TWT in which the at least one terminal is not allowed to set up a service period of the broadcast TWT with the second network device, and a time period of a service period of the second broadcast TWT is the same as a time period of the service period of the first broadcast TWT; and
the first indication information indicates that the second broadcast TWT is canceled or suspended.

11. The method according to claim 10, wherein the method further comprises:
when the second broadcast TWT is canceled, sending, by the second network device, second indication information to the at least one terminal, wherein the second indication information indicates to set up a third broadcast TWT after the first broadcast TWT is resumed, a time period of a service period of the third broadcast TWT is the same as the time period of the service period of the first broadcast TWT, and the third broadcast TWT is a broadcast TWT in which the at least one terminal is not allowed to set up a service period of the broadcast TWT with the second network device.

12. A communication method, wherein the method comprises:
receiving, by a first terminal in a cell of a second network device, first indication information from the second network device, wherein the first indication information indicates that at least one terminal in the cell of the second network device is able to perform data transmission, a communication range of the cell of the second network device overlaps a communication range of a cell of a first network device, a first broadcast TWT of the first network device is suspended, and the first broadcast TWT is suspended means that a broadcast TWT between the first network device and a terminal in the cell of the first network device is suspended; and
performing, by the first terminal, data transmission based on the first indication information.

13. The method according to claim 12, wherein the first indication information indicates that the at least one terminal is able to perform data transmission in a first time, and the first time is a time in which the first network device sets up a service period of the first broadcast TWT when the first broadcast TWT is not suspended.

14. The method according to claim 13, wherein the second network device sets up a second broadcast TWT, the second broadcast TWT is a broadcast TWT in which the at least one terminal is not allowed to set up a service period of the broadcast TWT with the second network device, a time period of a service period of the second broadcast TWT is the same as a time period of the service period of the first broadcast TWT, and the first indication information indicates that the second broadcast TWT is canceled or suspended.

15. The method according to claim 14, wherein the method further comprises:
when the second broadcast TWT is canceled, receiving, by the first terminal, second indication information from the second network device, wherein the second indication information indicates to set up a third broadcast TWT after the first broadcast TWT is resumed, a time period of a service period of the third broadcast TWT is the same as the time period of the service period of the first broadcast TWT, and the third broadcast TWT is a broadcast TWT in which the at least one terminal is not allowed to set up a service period of the broadcast TWT with the second network device.

16. A communication apparatus, wherein the apparatus is configured to perform the method according to any one of claims 1 to 4.

17. A communication apparatus, wherein the apparatus is configured to perform the method according to any one of claims 5 to 11.

18. A communication apparatus, wherein the apparatus is configured to perform the method according to any one of claims 12 to 15.

19. A communication apparatus, wherein the communication apparatus comprises a processor and a memory; the memory is configured to store computer instructions; and when the processor executes the instructions, the communication apparatus is enabled to perform the method according to any one of claims 1 to 15.

20. A computer-readable storage medium, wherein the computer-readable storage medium comprises a computer program or instructions; and when the computer program or the instructions are run on a computer, the computer is enabled to perform the method according to any one of claims 1 to 15.
